# EUROPEAN PATENT SPECIFICATION

(11) **EP 2 800 183 B1**
(45) Date of publication and mention of the grant of the patent: **29.08.2018**
(21) Application number: 11878431.3
(22) Date of filing: 28.12.2011
(51) Int. Cl.: H01M 8/04, B60L 11/18, H01M 8/00, H01M 8/10, H02J 7/34

(54) **FUEL CELL SYSTEM**
BRENNSTOFFZELLENSYSTEM
SYSTÈME À PILE À COMBUSTIBLE

(43) Date of publication of application: 05.11.2014
(73) Proprietor: TOYOTA JIDOSHA KABUSHIKI KAISHA, Toyota-shi, Aichi-ken, 471-8571 (JP)
(72) Inventor: MANABE, Kota, Toyota-shi Aichi-ken, 471-8571 (JP); TANO, Yutaka, Toyota-shi Aichi-ken, 471-8571 (JP); KANEKO, Tomohiko, Toyota-shi Aichi-ken, 471-8571 (JP)
(74) Representative: Kuhnen & Wacker Patent- und Rechtsanwaltsbüro PartG mbB
(86) International application number: PCT/JP2011/080465
(87) International publication number: WO 2013/099009

(56) References cited:
- JP-A- 2008 265 462
- JP-A- 2009 142 098
- JP-A- 2010 057 284
- JP-A- 2010 057 284
- JP-A- 2010 154 652
- JP-A- 2010 154 652

## Description

### Technical Field

The present invention relates to a fuel cell system comprising a fuel cell and a secondary cell as a power supply source to a load.

### Background Art

A fuel cell system with two power supply sources, being a fuel cell and a secondary cell, or a fuel cell vehicle equipped with such fuel cell system, have been known heretofore. For example, the fuel cell system of Patent Document 1 comprises two converters, namely, a converter for fuel cells and a converter for secondary cells, which are connected in parallel with respect to a load, and these two converters co-operate in order to stably supply electric power to the load.

In this type of fuel cell system, when a malfunction occurs at the converter for fuel cells and the output from the fuel cell thereby decreases, the output from the secondary cell would increase in order to compensate for the amount of decrease in the output from the fuel cell. In such a case, if the amount of discharge of the secondary cell exceeds an allowable amount, this may cause deficiencies associated with over discharge.

For such deficiencies, Patent Document 1 discloses a technique of suppressing over discharge from the secondary cell when it is determined that the converter for fuel cells is malfunctioning, by limiting the upper limit of the output power which is supplied to the load from an inverter to the output power of the converter for fuel cells or less. Similarly, Patent Document 2 addresses the control of an electric supply system in a vehicle when environmental conditions such as temperature vary greatly, and Patent Document 3 addresses the control of an electric supply system in a vehicle when a secondary battery fails.

### Prior Art Reference

### Patent Document

Patent Document 1: JP2010-135258 A
Patent Document 2: JP2010-154652 A
Patent Document 3: JP2010-057284 A

### Summary of the Invention

### Problem to be Solved by the Invention

However, in a fuel cell system comprising a converter for fuel cells and a converter for secondary cells, since the converter for secondary cells which serves as a buffer for changes in load is configured to control the input voltage to the inverter, if an abnormality such as a failure occurs to the secondary cell and a power source path between the secondary cell and the inverter is blocked, the input voltage to the inverter would not be able to be controlled and it would be difficult to stably operate the load only by the fuel cell.

As one example of this, in a fuel cell vehicle equipped with a fuel cell system, it would be difficult to move the vehicle to a retreat position on one's own by stably operating the drive motor only with the fuel cell.

The present invention has been made in view of the above-described circumstances. An object of the present invention is to provide a fuel cell system capable of stable operation of a load only by a fuel cell, even during the occurrence of an abnormality of the secondary cell.

### Means for Solving the Problem

In order to achieve the above object, a fuel cell system according to the present invention is a fuel cell system comprising a fuel cell and a secondary cell as power supply sources to a load, the system comprising:
a fuel cell power supply path that connects the fuel cell and a first load;
a first converter provided on the fuel cell power supply path, the first converter being capable of boosting an output of the fuel cell;
a first secondary cell power supply path that connects the secondary cell to a first connecting point on the fuel cell power supply path located closer to the first load side than the first converter;
a second converter provided on the first secondary cell power supply path, the second converter being capable of boosting an output of the secondary cell;
a second secondary cell power supply path that connects a second load to a second connecting point on the first secondary cell power supply path located between the second converter and the secondary cell;
a first control part that controls the first converter; and
a second control part that controls the second converter,
wherein, during normal operation, the first control part allows the first converter to control an output voltage of the fuel cell, and the second control part allows the second converter to control an output voltage to the first load side, and
wherein, during an occurrence of an abnormality of the secondary cell, the first control part allows the first converter to control an output voltage thereof, and the second control part allows the second converter to control an output voltage to the second load side.

The fuel cell system with such configuration enables a stable power supply to a first load and a second load by controlling two converters even only from the fuel cell during an occurrence of an abnormality of the secondary cell.

In the above-described configuration, during an occurrence of an abnormality of the secondary cell, the output voltage of the first converter may be controlled so as to match a requested output of the fuel cell system, and the output voltage of the second converter to the second load side may be controlled at a constant voltage.

In the above-described configuration, during an occurrence of an abnormality of the secondary cell, the output voltage of the first converter may be controlled at a constant voltage and the output voltage of the second converter to the second load side may be controlled so as to match a requested output of the second load.

In the above-described configuration, the fuel cell system may comprise a circuit breaking part between the secondary cell and the second connecting point on the first secondary cell power supply path, and may be configured such that the circuit breaking part is disconnected during an occurrence of an abnormality of the secondary cell.

In the fuel cell system of the above-described configuration, if the circuit breaking part operates and the circuit breaks upon an occurrence of an abnormality of the secondary cell, power would not be supplied from the secondary cell to the first load and the second load.

However, in such a case, the voltage to be controlled by the first converter is changed, and the first converter that normally controls the output voltage of the fuel cell (in other words, the input voltage of the first converter) would instead control the output voltage thereof.

Simultaneously, the voltage to be controlled by the second converter is changed, and the second converter that normally controls the output voltage to the first load side (in other words, the output voltage of the second converter) would instead control the output voltage to the second load side.

In the above-described configuration, the fuel cell system may comprise an abnormality detection part that detects an occurrence of an abnormality of the secondary cell; and
a third control part that forcibly disconnects the circuit breaking part when the occurrence of an abnormality of the secondary cell has been detected by the abnormality detection part.

In the fuel cell system of the above-described configuration, when an occurrence of an abnormality of the secondary cell is detected, the secondary cell is instantaneously decoupled from the fuel cell system and stable operation by only the fuel cell would be possible.

### Effect of the Invention

The fuel cell system of the present invention enables stable operation of a load by only a fuel cell, even during an occurrence of an abnormality of the secondary cell.

### Brief Description of the Drawings

Fig. 1 is a configuration diagram of a fuel cell system according to an embodiment of the present invention.
Fig. 2 is a flow chart showing one example of control performed by a control part 30 when an occurrence of an abnormality of the secondary cell 20 has been detected.

### Mode for Carrying out the Invention

An embodiment of the fuel cell system according to the present invention will be described below with reference to the attached drawings. This embodiment will describe an example in which the fuel cell system according to the present invention is used as an on-vehicle power generation system for a fuel cell vehicle (fuel cell hybrid vehicle: FCHV).

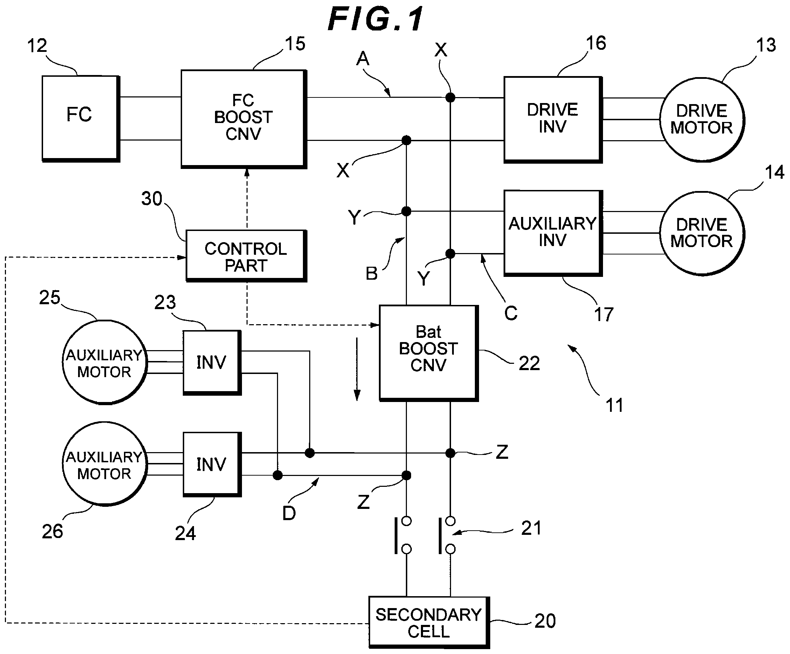

As illustrated in Fig. 1, a fuel cell system 11 of this embodiment comprises a fuel cell 12 and a secondary cell 20 as power supply sources to a load.

The fuel cell 12 is, for example, a polymer electrolyte-type fuel cell and the fuel cell 12 has a stack structure with numerous cells stacked therein. Each cell has an air electrode on one surface of an electrolyte formed of an ion-exchange membrane and a fuel electrode on the other surface of the electrolyte, and also has a pair of separators that sandwich the air electrode and the fuel electrode therebetween. Furthermore, hydrogen gas serving as a fuel gas is supplied to a hydrogen gas flow path of one separator while air serving as the oxidant gas is supplied to an oxidant gas flow path of the other separator so as to cause an electrochemical reaction between these gases and thereby generate electric power.

The fuel cell 12 is connected to a drive motor (first load) 13 for running a vehicle through a power supply path (fuel cell power supply path) A. On the power supply path A, an FC boost converter (first converter) 15 and a drive inverter 16 are provided in this order, beginning from the fuel cell 12 side.

The FC boost converter 15 is a direct current voltage converter, and it regulates a direct current voltage input from the fuel cell 12 and outputs it to the drive inverter 16 side. The drive motor 13 is, for example, a three-phase alternating current motor, and the drive inverter 16 converts direct current into a three-phase alternating current and supplies the alternating current to the drive motor 13.

The power supply path A is connected to a power supply path (first secondary cell power supply path) B. A connecting point X between the power supply path A and the power supply path B is located between the FC boost converter 15 and the drive inverter 16. The secondary cell 20 is connected at one end of the power supply path B, and in between the secondary cell 20 and the connecting point X, the relay (circuit breaking part) 21 and the battery boost converter (second converter) 22 are provided in this order, beginning from the secondary cell 20 side.

The secondary cell 20 is capable of charging the excess output power of the fuel cell 12 or the regenerative power of the drive motor 13, replenishing the shortage of power if there is a shortage of output power of the fuel cell 12 for the power required for driving the drive motors 13, 14, or supplying power to the below-mentioned auxiliary motors 25, 26, based on the control signal from the control part 30.

The battery boost converter 22 is a direct current voltage converter having functions of: regulating a direct current voltage input from the secondary cell 20 and outputting it to the drive motors 13, 14; and regulating a direct current voltage input from the fuel cell 12 or the drive motor 13 and outputting it to the secondary cell 20 and/or auxiliary motors 25, 26. The above functions of the battery boost converter 22 enable the charging/discharging of the secondary cell 20.

Due to such functions of the battery boost converter 22, during normal operation of the fuel cell system 11, while the input voltage to the drive inverter 16 and the auxiliary inverter 17 is controlled, when a relay 21, which will be described later, is disconnected for some reason and the secondary cell 20 is in a decoupled state from the fuel cell system 11 (during an occurrence of an abnormality of the secondary cell), the supply of power from the fuel cell 12 to the auxiliary motors 25 and 26 is enabled.

A power supply path (fuel cell power supply path) C is connected to a high-voltage side of the power supply path B. A connecting point Y of the power supply path B and the power supply path C is located between the connecting point X and the battery boost converter 22. The drive motor (first load) 14 is connected at one end of the power supply path C. The drive motor 14 is, for example, a three-phase alternating current motor and is a drive motor of an air compressor that pumps air (oxidant gas) to the fuel cell 12. An auxiliary inverter 17 is provided between the drive motor 14 and the connecting point Y. The auxiliary inverter 17 converts the direct current to a three-phase alternating current and supplies it to the drive motor 14.

A power supply path D (second secondary cell power supply path) is connected to a low-voltage side of the power supply path B (secondary cell 20 side). A connecting point Z of the power supply path B and the power supply path D is located between the battery boost converter 22 and the relay 21. The power supply path D is branched into two, and auxiliary inverters 23, 24 and auxiliary motors 25, 26 are provided, respectively, to branch destinations thereof.

The auxiliary motor 25 is a motor that drives a hydrogen pump for flowing back, to the fuel cell 12, a hydrogen off-gas discharged from a hydrogen gas flow path of the fuel cell 12. The auxiliary motor 26 is a motor that drives a cooling water pump for circulating cooling water used for temperature control of the fuel cell 12. The auxiliary inverters 23, 24 convert the direct current to a three-phase alternating current and supply the direct current to the auxiliary motors 25, 26, respectively.

A control part 30 is a computer system for integration control of the fuel cell system 11, and includes, for example, CPU, RAM, ROM, etc. The control part 30 calculates the requested power of the entire load, including the drive motors 13, 14 and the auxiliary motors 25, 26, in response to the input of signals supplied from various sensors (for example, a signal representing an accelerator position, a signal representing a vehicle speed, a signal representing an output current or output voltage of the fuel cell 12, etc., and only a part thereof is illustrated in Fig. 1).

The control part 30 of this embodiment is able to detect the occurrence of an abnormality such as a failure of the secondary cell 20 based on the signal supplied from the sensors provided at the secondary cell 20 or its surrounding vicinity. Namely, the control part 30 also functions as an abnormality detection part of the present invention.

Furthermore, when the control part 30 detects the occurrence of an abnormality of the secondary cell 20, it opens the relay 21 and cuts off the supply of electric power from the secondary cell 20 to the drive motors 13, 14 and the auxiliary motors 25, 26. Namely, the control part 30 also functions as a third control part of the present invention.

Loads other than the drive motors 13, 14 and the auxiliary motors 25, 26 may include electric power consumed by devices required for running vehicles (such as a speed regulator, a wheel control device, a steering device and a suspension device) or electric power consumed by devices located in a passenger space (such as an air-conditioning device, a lighting device and audio).

The control part 30 determines the distribution of each output power of the fuel cell 12 and the secondary cell 20 and calculates a power generation command value. More specifically, when the control part 30 calculates the requested power for the fuel cell 12 and the secondary cell 20, such control part 30 controls the operations of the FC boost converter 15 and the battery boost converter 22 such that the requested power can be obtained.

During normal operation which includes a period when no abnormality is occurring at the secondary cell 20, the control part 30 allows the FC boost converter 15 to control the output voltage of the fuel cell 12 and allows the battery boost converter 22 to control the output voltage to the drive motors 13, 14, i.e., the input voltage to the drive inverter 16 and the auxiliary inverter 17. However, during an occurrence of an abnormality of the secondary cell 20, the control part 30 allows the battery boost converter 22 to control the output voltage to the auxiliary motors 25, 26 and allows the FC boost converter 15 to control the output voltage, i.e., to control such that the input voltage to the drive inverter 16 and the auxiliary inverter 17 matches the requested output of the entire fuel cell system 11, including the drive output of the drive motors 13, 14 and the auxiliary motors 25, 26.

As described above, the control part 30 of this embodiment is configured as one control device having both the function of a first control part and the function of a second control part of the present invention, and it is obvious that the first control part and the second control part may be configured from different control devices.

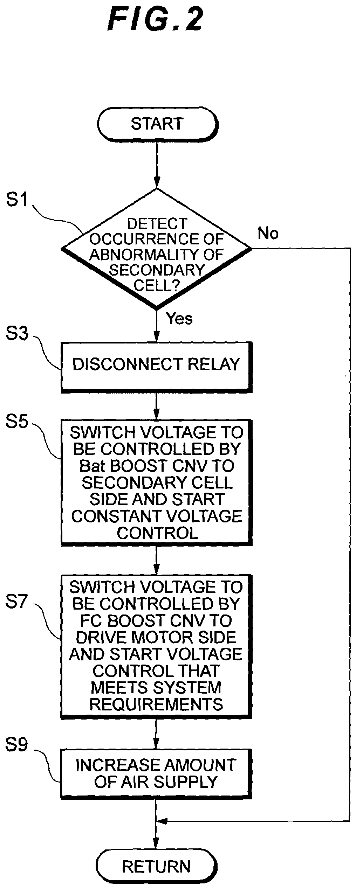

The fuel cell system 11 of this embodiment has a feature of enabling the system control to be switched to a battery-less retreat running mode and still continue operation of the vehicle when a failure (abnormality) of the secondary cell 20 is detected. The operation performed by the control part 30 in this regard will be described in detail below, with reference to the flow chart of Fig. 2.

When the control part 30 detects a failure (abnormality) of the secondary cell 20 (step S1), the control part 30 disconnects the relay 21 of the secondary cell 20 (step S3), thereby decoupling the secondary cell 20 from the fuel cell system 11.

Next, the control part 30 switches the subject to be controlled by the battery boost converter 22 to voltage at the secondary cell 20 side, i.e., the input voltage to the auxiliary inverters 23, 24, and then performs a constant voltage control (step S5). At this point, the control part 30 commands a voltage in which the auxiliary inverters 23, 24 connected to the power supply path D are able to supply maximum output, for example, the OCV voltage of the secondary cell 20, as the voltage at the secondary cell side which is controlled by the battery boost converter 22.

Furthermore, the control part 30 switches the subject to be controlled by the FC boost converter 15 to the input voltage of the drive inverter 16 and the auxiliary inverter 17, and performs a voltage control that matches the requested output of the entire fuel cell system 11, including the output required for driving the drive motors 13, 14 and the auxiliary motors 25, 26 (step S7).

At this point, there may be cases where control errors caused by the load map and load variations stored in the control part 30 and used for various kinds of control as well as the differences in consumption power caused by demagnetization, etc. of drive motors 13, 14 will inevitably occur.

In such case, if the situation as described above is not dealt with, an output that exceeds the allowable output calculated from the air flow rate supplied to the fuel cell 12 is extracted from the fuel cell 12 and may cause an unstable power generation state.

Then, by increasing the revolution speed of the drive motor 14 higher than that seen during a normal operation such that the fuel cell 12 is able to output an amount of output corresponding to the above control error, the control part 30 increases the air flow rate supplied to the fuel cell 12 (step S9). The increase correction of this air flow rate may be set to an amount that can absorb the control error which may be caused by the system, thereby enabling the system efficiency to be optimized.

By controlling as described above, the voltage of the terminal to which the secondary cell 20 was connected during normal operation, namely, the input voltage of the auxiliary inverters 23, 24 and the input voltage of the drive inverter 16 and the auxiliary inverter 17 will be controlled by two converters (FC boost converter 15 and battery boost converter 22), respectively, and as a result, the terminal voltage (output voltage) of the fuel cell 12 would also be determined in accordance with the requested power for the fuel cell system 11. Thus, stable operation of the fuel cell system 11 would be possible, and a so-called retreat running mode would also be possible.

As described above, under a situation where the secondary cell 20 is decoupled from the fuel cell system 11, the battery boost converter 22 needs to control the voltage at the secondary cell 20 side, namely, the input voltage to the auxiliary inverters 23, 24. In such situation, as a result of a significant decrease in the capacitance at the connecting point Z, the control stability of the battery boost converter 22 would deteriorate more than it would during the normal operation.

Even in such situation, in order to stabilize the control of the input voltage to the auxiliary inverters 23, 24 by the battery boost converter 22, the control part 30 may control the output voltage of the FC boost converter 15 such that the input voltage to the drive inverter 16 and the auxiliary inverter 17 is fixed at a constant voltage, instead of performing control of the output of the FC boost converter 15 as described in the embodiment above.

Specifically, first, the requested output of the entire fuel cell system 11 required for retreat running of the vehicle is determined, then, the input voltage to the drive inverter 16 and the auxiliary inverter 17 which are capable of outputting such requested output is determined, and then such input voltage is set as a target output voltage of the FC boost converter 15, thereby enabling control stability of the battery boost converter 22 to be ensured.

Since the response characteristic of the drive motor 14 is slower than the response characteristic of the drive motor 13, in a case of performing a torque control of the drive motor 13 and a torque control of the drive motor 14 in accordance with the requested acceleration (accelerator pedal position), the rate of increase in the output of the drive motor 13 would be faster than the rate of increase in the output of the drive motor 14, and the fuel cell 12 may exceed the possible amount of output.

Although control for increasing the amount of air supply as described above is also effective as a measure for such a case, instead of increasing the amount of air supply, the output upper limit value of the power which is able to be generated by the fuel cell 12 may be determined based on the air flow rate detected from the flow meter, such as an air flow sensor, that is provided, for example, at the air supply path of the fuel cell 12, and then, torque control of the drive motors 13, 14 in accordance with the requested acceleration may be performed within a range that does not exceed such output upper limit value.

Furthermore, in this embodiment, since the secondary cell 20 is decoupled from the fuel cell system 11 when an occurrence of an abnormality of the secondary cell 20 is detected, in such situation, any motor generation may be prohibited, or, if it is determined that a stable consumption of regenerative power is possible by the drive motor 14, the auxiliary motors 25, 26 or other auxiliary machines (for example, a heater for heating), motor regeneration may be allowed within the consumable range. In such case, even under a situation where the secondary cell 20 cannot be used, the deterioration of comfort for driving can be kept to a minimum.

Although the above embodiment describes a situation where the fuel cell system according to the present invention is installed in a fuel cell vehicle, the fuel cell system according to the present invention may also be applied to various types of movable bodies (e.g., robots, boats, ships and planes) other than fuel cell vehicles. Furthermore, the fuel cell system according to the present invention may also be applied to a stationary power generating system used as power generating equipment for construction (e.g., for houses and buildings).

### Description of Reference Numerals

11... fuel cell system; 12... fuel cell; 13, 14... drive motor (first load); 15...FC boost converter (first converter); 20... secondary cell; 21...relay (circuit breaking part); 22... battery boost converter (second converter); 25, 26...auxiliary motor (second load); 30...control part... (first control part, second control part, third control part, abnormality detection part); A, C...power supply path (fuel cell power supply path); B...power supply path (first secondary cell power supply path); D... power supply path (second secondary cell power supply path)

## Claims

1. A fuel cell system (11) comprising a fuel cell (12) and a secondary cell (20) as power supply sources to a load (13, 14, 25, 26), the system comprising:
a fuel cell power supply path (C) that connects the fuel cell (12) and a first load (13, 14);
a first converter (15) provided on the fuel cell power supply path (C), the first converter (15) being capable of boosting an output of the fuel cell (12);
a first secondary cell power supply path (B) that connects the secondary cell (20) to a first connecting point on the fuel cell power supply path (C) located closer to the first load side than the first converter (15);
a second converter (22) provided on the first secondary cell power supply path (B), the second converter (22) being capable of boosting an output of the secondary cell (20);
a second secondary cell power supply path (D) that connects a second load (25, 26) to a second connecting point on the first secondary cell power supply path (B) located between the second converter (22) and the secondary cell (20);
a first control part (30) that controls the first converter (15); and
a second control part (30) that controls the second converter (22), wherein, during normal operation, the first control part (30) allows the first converter (15) to control an output voltage of the fuel cell (12), and the second control part (30) allows the second converter (22) to control an output voltage to the first load side, and
wherein, during occurrence of an abnormality such as a failure of the secondary cell (20), the first control part (30) allows the first converter (15) to control an output voltage thereof, and the second control part (30) allows the second converter (22) to control an output voltage to the second load side;
**characterized in that,**
during occurrence of the abnormality of the secondary cell (20), the output voltage of the first converter (15) is controlled at a constant voltage and the output voltage of the second converter (22) to the second load side is controlled so as to match a requested output of the second load (25, 26).

2. The fuel cell system (11) according to claim 1, comprising a circuit breaking part (21) between the secondary cell (20) and the second connecting point on the first secondary cell power supply path (B), wherein the circuit breaking part (21) is disconnected during an occurrence of the abnormality of the secondary cell (20).

3. The fuel cell system (11) according to claim 1 or 2, comprising:
an abnormality detection part (30) that detects an occurrence of the abnormality of the secondary cell (20); and
a third control part (30) that forcibly disconnects the circuit breaking part (21) when the occurrence of the abnormality of the secondary cell (20) has been detected by the abnormality detection part (30).

## Patentansprüche

1. Brennstoffzellensystem (11), aufweisend eine Brennstoffzelle (12) und eine Sekundärzelle (20) als Leistungszufuhrquellen zu einer Last (13, 14, 25, 26), wobei das System aufweist:
einen Brennstoffzellenleistungs-Zuführweg (C), der die Brennstoffzelle (12) und eine erste Last (13, 14) verbindet;
einen ersten Wandler (15), der auf dem Brennstoffzellenleistungs-Zuführweg (C) angeordnet ist, wobei der erste Wandler (15) in der Lage ist, eine Leistungsabgabe der Brennstoffzelle (12) zu verstärken;
einen ersten Sekundärzellenleistungs-Zuführweg (B), der die Sekundärzelle (20) mit einem ersten Verbindungspunkt auf dem Brennstoffzellenleistungs-Zuführweg (C) verbindet, der sich näher zu der Seite der ersten Last befindet als der erste Wandler (15);
einen zweiten Wandler (22), der auf dem ersten Sekundärzellenleistungs-Zuführweg (B) angeordnet ist, wobei der zweite Wandler (22) in der Lage ist, eine Leistungsabgabe der Sekundärzelle (20) zu verstärken;
einen zweiten Sekundärzellenleistungs-Zuführweg (D), der eine zweite Last (25, 26) mit einem zweiten Verbindungspunkt auf dem ersten Sekundärzellenleistungs-Zuführweg (B) verbindet, der sich zwischen dem zweiten Wandler (22) und der Sekundärzelle (20) befindet;
ein erstes Steuerteil (30), das den ersten Wandler (15) steuert; und
ein zweites Steuerteil (30), das den zweiten Wandler (22) steuert,
wobei, während eines Normalbetriebs, das erste Steuerteil (30) dem ersten Wandler (15) ermöglicht, eine Ausgangsspannung von der Brennstoffzelle (12) zu steuern, und das zweite Steuerteil (30) dem zweiten Wandler (22) ermöglicht, eine Ausgangsspannung auf die Seite der ersten Last zu steuern, und
wobei, während des Auftretens einer Anomalität, wie etwa eines Ausfalls der Sekundärzelle (20), das erste Steuerteil (30) dem ersten Wandler (15) ermöglicht, eine Ausgangsspannung derselben zu steuern, und das zweite Steuerteil (30) dem zweiten Wandler (22) ermöglicht, eine Ausgangsspannung auf die Seite der zweiten Last zu steuern;
**dadurch gekennzeichnet, dass**
während des Auftretens der Anomalität der Sekundärzelle (20), die Ausgangsspannung des ersten Wandlers (15) bei einer konstanten Spannung gesteuert wird und die Ausgangsspannung des zweiten Wandlers (22) so auf die Seite der zweiten Last gesteuert wird, dass sie einer Soll-Leistungsabgabe der zweiten Last (25, 26) entspricht.

2. Brennstoffzellensystem (11) nach Anspruch 1, aufweisend ein Stromkreisunterbrechungsteil (21) zwischen der Sekundärzelle (20) und dem zweiten Verbindungspunkt auf dem ersten Sekundärzellenleistungs-Zuführweg (B), wobei das Stromkreisunterbrechungsteil (21) während eines Auftretens der Anomalität der Sekundärzelle (20) abgeschaltet ist.

3. Brennstoffzellensystem (11) nach Anspruch 1 oder 2, aufweisend:
ein Anomalitätserfassungsteil (30), das ein Auftreten der Anomalität der Sekundärzelle (20) erfasst; und
ein drittes Steuerteil (30), das die Abschaltung des Stromkreisunterbrechungsteils (21) erzwingt, wenn das Auftreten der Anomalität der Sekundärzelle (20) durch das Anomalitätserfassungsteil (30) erfasst worden ist.

## Revendications

1. Système de pile à combustible (11), comprenant une pile à combustible (12) et une pile secondaire (20) en tant que sources d'alimentation électrique pour une charge (13, 14, 25, 26), le système comprenant :
un chemin d'alimentation électrique (C) de pile à combustible qui connecte la pile à combustible (12) et une première charge (13, 14) ;
un premier convertisseur (15) prévu sur le chemin d'alimentation électrique (C) de pile à combustible, le premier convertisseur (15) étant capable de renforcer une sortie de la pile à combustible (12) ;
un premier chemin d'alimentation électrique (B) de pile secondaire qui connecte la pile secondaire (20) à un premier point de connexion sur le chemin d'alimentation électrique (C) de pile à combustible situé plus près du côté de la première charge que le premier convertisseur (15) ;
un deuxième convertisseur (22) prévu sur le premier chemin d'alimentation électrique (B) de pile secondaire, le deuxième convertisseur (22) étant capable de renforcer une sortie de la pile secondaire (20) ;
un deuxième chemin d'alimentation électrique (D) de pile secondaire qui connecte une deuxième charge (25, 26) à un deuxième point de connexion sur le premier chemin d'alimentation électrique (B) de pile secondaire situé entre le deuxième convertisseur (22) et la pile secondaire (20) ;
une première partie de commande (30) qui commande le premier convertisseur (15) ; et
une deuxième partie de commande (30) qui commande le deuxième convertisseur (22),
dans lequel, pendant le fonctionnement normal, la première partie de commande (30) permet au premier convertisseur (15) de commander une tension de sortie de la pile à combustible (12), et la deuxième partie de commande (30) permet au deuxième convertisseur (22) de commander une tension de sortie vers le côté de la première charge, et
dans lequel, pendant la survenue d'une anomalie telle qu'une défaillance de la pile secondaire (20), la première partie de commande (30) permet au premier convertisseur (15) de commander sa tension de sortie, et la deuxième partie de commande (30) permet au deuxième convertisseur (22) de commander une tension de sortie vers le côté de la deuxième charge ;
**caractérisé en ce que,**
pendant la survenue de l'anomalie de la pile secondaire (20), la tension de sortie du premier convertisseur (15) est commandée à une tension constante, et la tension de sortie du deuxième convertisseur (22) vers le côté de la deuxième charge est commandée de façon à correspondre à une sortie requise de la deuxième charge (25, 26).

2. Système de pile à combustible (11) selon la revendication 1, comprenant une partie coupe-circuit (21) entre la pile secondaire (20) et le deuxième point de connexion sur le premier chemin d'alimentation électrique (B) de pile secondaire, dans lequel la partie coupe-circuit (21) est déconnectée pendant une survenue de l'anomalie de la pile secondaire (20).

3. Système de pile à combustible (11) selon la revendication 1 ou 2, comprenant :
une partie de détection d'anomalie (30) qui détecte une survenue de l'anomalie de la pile secondaire (20) ; et
une troisième partie de commande (30) qui déconnecte de force la partie coupe-circuit (21) quand la survenue de l'anomalie de la pile secondaire (20) a été détectée par la partie de détection d'anomalie (30).
